# EUROPÄISCHE PATENTSCHRIFT

(11) **EP 3 591 128 B1**
(45) Veröffentlichungstag und Bekanntmachung des Hinweises auf die Patenterteilung: **31.03.2021**
(21) Anmeldenummer: 19183129.6
(22) Anmeldetag: 28.06.2019
(51) Int. Cl.: E03C 1/04, F16K 11/22, E03C 1/042, F16K 11/00

(54) **ARMATURENEINHEIT MIT AXIALER AUSRICHTUNG VON BEDIENELEMENTEN**
FITTING UNIT WITH AXIAL ALIGNMENT OF CONTROL ELEMENTS
UNITÉ DE ROBINETTERIE À ORIENTATION AXIALE DES ÉLÉMENTS DE COMMANDE

(30) Priorität: 02.07.2018 DE 202018103768 U
(43) Veröffentlichungstag der Anmeldung: 08.01.2020
(73) Patentinhaber: KEUCO GmbH & Co. KG, 58675 Hemer (DE)
(72) Erfinder: ALTHOFF, Christopher, 40223 Düsseldorf (DE); SADOWSKI, Olaf, 58638 Iserlohn (DE); JUNG, David, 58644 Iserlohn (DE)
(74) Vertreter: Cohausz & Florack

(56) Entgegenhaltungen:
- CN-A- 107 990 020
- FR-A1- 2 835 006
- KR-B1- 101 237 984
- US-A- 4 164 239
- US-B2- 8 627 844

## Beschreibung

Die Erfindung betrifft eine Armatureneinheit für den Sanitärbereich, mit einem Grundkörper aufweisend eine Axialrichtung, einen Wandabschnitt zur Anbringung an einer Wand und einen Frontabschnitt, mit einer Wandseite am Wandabschnitt, wobei die Wandseite an einem ersten Ende des Grundkörpers in Axialrichtung angeordnet ist, mit einer Frontseite am Frontabschnitt, wobei die Frontseite an einem zweiten Ende des Grundkörpers angeordnet ist, welches dem ersten Ende in Axialrichtung gegenüberliegt, mit Wasseranschlüssen am Wandabschnitt, mit mindestens einem Ablauf, welcher mit den Wasseranschlüssen über Wasserwege verbunden ist, wobei Volumenströme durch die Wasserwege über Regelmittel regelbar sind, mit einem Temperaturbedienelement zur Einstellung einer Wassertemperatur anhand der Regelmittel und mit einem Mengenbedienelement zur Einstellung einer Wassermenge anhand der Regelmittel, wobei das Temperaturbedienelement und das Mengenbedienelement am Frontabschnitt in Axialrichtung nacheinander und zwischen Frontseite und Wandseite angeordnet sind.

Im Stand der Technik werden zur Bereitstellung von Mischwasser aus Warm- und Kaltwasser Einhebelmischer verwendet. Einhebelmischer ermöglichen die Einstellung der Wassertemperatur und der Wassermenge über ein einziges Bedienelement. Ein als Hebel ausgestaltetes Bedienelement kann einerseits zur Einstellung der Temperatur rotiert und andererseits zur Einstellung der Menge geschwenkt werden. Einhebelmischer können bequem mit einer Hand betätigt werden, jedoch erschwert die gemeinsame Bedienung von Temperatur und Menge über ein einziges Bedienelement eine genaue Einstellung der Wassermischung für den Benutzer.

Als Alternative für Einhebelmischer werden Armatureneinheiten verwendet, welche separate Temperaturbedienelemente und Mengenbedienelemente aufweisen. Solche Armatureneinheiten sind beispielsweise als Aufputzarmaturen mit einem Grundkörper ausgeführt, welcher eine Axialrichtung parallel zur Wand aufweist und wobei die Axialrichtung horizontal an der Wand ausgerichtet ist. An einem Ende des Grundkörpers ist ein Temperaturbedienelement und am anderen Ende des Grundkörpers ein Mengenbedienelement angeordnet, welche über eine Drehbewegung eine Einstellung von Wassertemperatur und der Wassermenge zulassen. Der Grundkörper ist damit so ausgestaltet, dass ein Benutzer die Bedienelemente üblicherweise mit beiden Händen betätigt. Ebenso können Armatureneinheiten als Unterputzarmaturen ausgeführt sein, wobei die Regelmittel innerhalb der Wand angeordnet sind. Die Regelmittel werden über separate Bedienelemente bedient, welche nebeneinander bzw. übereinander an der Wand angeordnet sind. Auch hier erfolgt eine Bedienung üblicherweise mit beiden Händen.

Aufgrund dieser Ausgestaltung weisen die entsprechenden Armatureneinheiten oft große Abmessungen auf und lassen sich schwer in die Badzimmereinrichtung integrieren. Auch ist eine Betätigung beider Bedienelemente über eine Hand umständlich und erfordert ein Umgreifen an das andere Ende des länglichen Grundkörpers.

Aus der CN 107 990 020 A ist ein multifunktionales Ventil mit Temperaturregelung sowie Mengenregelung gemäß vom Benutzer vorgegebener Einstellungen anhand von Bedienelementen und mit einem Absperrventil sowie einem Thermostatventil bekannt. Eine Vielzahl an Wasserwegen ist zur Verbindung von Thermostatventil und Absperrventil sowie zur Verbindung mit Wasserauslässen wie etwa einer Handbrause vorgesehen.

Weiterhin ist aus der FR 2 835 006 A1 eine Armatur mit integrierter Ablage und Duschkopfhalterung sowie mit Hebeln zum Einstellen von Wassermenge und Wassertemperatur mit Brühschutz durch Winkelbeschränkung bekannt.

Die US 4 164 239 A betrifft einen Wasserhahn zur Mischung von Wasser aus Warm- und Kaltwasseranschlüssen bei konstantem Druck und Volumenkontrolle mit analoger Temperaturanzeige sowie einem Temperaturbedienelement.

Weiter ist aus der US 8 627 844 B2 eine Armatureinheit mit magnetischer Anbringung der Abdeckung an einer Wand sowie einem Ventilgehäuse mit Warm- und Kaltwasserzufluss und Mischwasserauslässen, welche über Wasserwege miteinander verbunden sind, und Bedienelementen zur Kontrolle der Wassertemperatur und Wassermenge bekannt.

Schließlich ist aus der KR 101 237 984 B1 eine Anordnung zur Verbindung von Wasseranschlüssen in einer Wand mit einem Ventil, mittels welchem Wassertemperatur und Wassermenge eingestellt werden können, bekannt.

Vor diesem Hintergrund hat sich die vorliegende Erfindung die Aufgabe gestellt, eine Armatureneinheit anzugeben, welche einen kompakten Aufbau zulässt und den Bedienkomfort erhöht.

Diese Aufgabe wird dadurch gelöst, dass Wandabschnitt und Frontabschnitt über mindestens ein Teleskoprohr in mindestens einer Bohrung verbunden sind, wobei das mindestens eine Teleskoprohr zumindest einen Teil der Wasserwege bildet.

Der Grundkörper weist hierbei eine Axialrichtung auf, welche eine Vorzugsrichtung des Grundkörpers darstellt. Beispielsweise kann die Außenkontur des Grundkörpers auf einem Zylinder basieren und z.B. abgesehen von den Bedienelementen und dem Ablauf eine zylindrische Außenkontur aufweisen, wobei die Axialrichtung der Zylinderachse entspricht. Die Axialrichtung kann auch der längsten Ausdehnung des Grundkörpers entsprechen. Der Grundkörper weist weiter einen Wandabschnitt auf, welcher zur Anbringung an einer Wand vorgesehen ist und insbesondere Befestigungsmittel zur Befestigung der Armatureneinheit an der Wand aufweist. Der Frontabschnitt des Grundkörpers ist dafür vorgesehen, bei einer Anbringung der Armatureneinheit an einer Wand aus der Wandebene hervorzustehen und eine Betätigung der Bedienelemente zu ermöglichen. Der Frontabschnitt bestimmt auch gleichzeitig das Erscheinungsbild der montierten Armatureneinheit. Insbesondere sind Wandabschnitt und Frontabschnitt in Axialrichtung nacheinander und vorzugsweise benachbart zueinander angeordnet.

Wandseite und Frontseite sind jeweils am ersten und zweiten Ende des Grundkörpers angeordnet, wobei das erste und zweite Ende einander in Axialrichtung gegenüberliegen. Mit Wandseite und Frontseite ist hierbei eine Fläche bzw. Oberfläche am jeweiligen Ende gemeint, beispielsweise eine Stirnfläche der Frontseite und eine Grundfläche der Wandseite. Das erste Ende und/oder zweite Ende kann hierbei jeweils die Stelle des Grundkörpers bilden, welche entlang der Axialrichtung jeweils die äußerste Position einnimmt. Die Wandseite ist am Wandabschnitt und die Frontseite am Frontabschnitt gebildet. Wird die Armatureneinheit mit dem Wandabschnitt an einer Wand angebracht, kann die Wandseite innerhalb der Wand ausgerichtet sein, während die Frontseite vor der Wandebene angeordnet ist. Die Axialrichtung des Grundkörpers verläuft beispielsweise bei einem Anbringen der Armatureneinheit an einer Wand im Wesentlichen senkrecht zur Wandebene.

Wasseranschlüsse sind am Wandabschnitt angeordnet, wobei die Wasseranschlüsse insbesondere zum Anschluss an Wasserleitungen innerhalb der Wand ausgebildet sind. Hierbei können mindestens ein Wasseranschluss für Kaltwasser und mindestens ein Wasseranschluss für Warmwasser vorgesehen sein. Die Wasseranschlüsse sind hierbei insbesondere für einen seitlichen Anschluss der Wasserleitungen eingerichtet, d.h. zum Anschluss von Wasserleitungen mit einer Ausrichtung parallel zur Wandebene bzw. näherungsweise senkrecht zur Axialrichtung.

Der mindestens eine Ablauf ist für einen Ablauf des Mischwassers und beispielsweise zum Anschluss an eine Ableitung oder einen Schlauch vorgesehen. Der Ablauf ist beispielsweise am Frontabschnitt vorgesehen. Der Ablauf ist mit den Wasseranschlüssen mittels Wasserwegen verbunden. Volumenströme durch die Wasserwege sind zudem über Regelmittel regelbar, wobei die Regelmittel für die Einstellung des Mischverhältnisses von Kaltwasser und Warmwasser und damit für die Temperatur sowie der (gesamten) Wassermenge bzw. des Volumenstroms durch den Ablauf eingerichtet sind.

Mindestens zwei Bedienelemente sind vorgesehen, einerseits in Form eines Temperaturbedienelements zur Einstellung einer Wassertemperatur anhand der Regelmittel und andererseits in Form eines Mengenbedienelements zur Einstellung einer Wassermenge anhand der Regelmittel. Temperaturbedienelement und Mengenbedienelement sind insbesondere separat und optional beabstandet voneinander ausgebildet. Die Ausgestaltung als Temperaturbedienelement und Mengenbedienelement erlaubt eine sehr genaue und unabhängige Einstellung der Wassertemperatur und Wassermenge.

Dadurch, dass das Temperaturbedienelement und das Mengenbedienelement am Frontabschnitt in Axialrichtung nacheinander und zwischen Frontseite und Wandseite angeordnet sind, wird ein besonders kompakter Aufbau der Armatureneinheit gewährleistet. Insbesondere wird das Wasser über die Wasseranschlüsse am Wandabschnitt in die Armatureneinheit geleitet und durchläuft im Inneren der Armatureneinheit die Regelmittel, um am Frontabschnitt am Ablauf aus der Armatureneinheit auszutreten. Die Armatureneinheit kann somit mit den Funktionselementen im Wesentlichen entlang des Wasserflusses innerhalb der Armatureneinheit aufgebaut werden. Innerhalb des Temperaturbedienelements und Mengenbedienelements können auch Wasserwege vorgesehen sein, was einen kompakten Aufbau der Armatureneinheit weiter verbessert.

Gleichzeitig lässt sich durch die axiale Anordnung von Temperaturbedienelement und Mengenbedienelement der Bedienkomfort erhöhen, wobei sich beispielsweise beide Bedienelemente bequem mit einer Hand erreichen lassen. Die Axialrichtung des Grundkörpers verläuft beispielsweise bei einem Anbringen der Armatureneinheit an einer Wand im Wesentlichen senkrecht zur Wandebene, so dass Temperaturbedienelement und Mengenbedienelement in Axialrichtung nacheinander aus der Wand ragen. Ein Umgreifen auf eine andere Seite des Grundkörpers ist somit nicht notwendig.

In einer Ausgestaltung der Armatureneinheit ist das Temperaturbedienelement zwischen Mengenbedienelement und Wandseite angeordnet. Durch eine solche Anordnung kann beispielsweise ein unerwünschtes Verstellen der gewählten Temperatur vermieden werden, was den Bedienkomfort weiter erhöht. Zudem wird auch die Gefahr einer Verbrühung eingedämmt.

Insbesondere kann das Temperaturbedienelement in einem mittleren Abschnitt des Grundkörpers angeordnet werden, beispielsweise am dem Wandabschnitt zugeordneten Ende des Frontabschnitts. Hierbei kann das Temperaturbedienelement an einem Abschnitt des Grundkörpers vorgesehen sein, welcher nach einer Montage der Armatureneinheit näherungsweise an der Wandebene liegt, womit das Temperaturbedienelement intuitiv zu greifen ist.

In einer Ausgestaltung der Armatureneinheit ist das Mengenbedienelement am zweiten Ende des Grundkörpers angeordnet. Hiermit wird eine besonders einfache Betätigung des Mengenbedienelements erreicht, welches beispielsweise als Drehknopf am zweiten Ende des Grundkörpers ausgestaltet ist. In diesem Fall kann das Mengenbedienelement die Frontseite bilden. Das Mengenbedienelement lässt sich damit einfach greifen und drehen.

In einer Ausgestaltung der Armatureneinheit ist das Temperaturbedienelement ringförmig um den Grundkörper angeordnet. Entsprechend kann das Temperaturelement in einem mittleren Bereich des Grundkörpers angeordnet werden und Wasserwege können beispielsweise innerhalb des Temperaturbedienelements angeordnet werden. Durch eine Drehung des Temperaturbedienelements kann eine Temperaturänderung bewirkt werden, was eine intuitive und genaue Einstellung der Temperatur erlaubt. Das Temperaturbedienelement kann einen Verbrühungsschutz aufweisen, wobei beispielsweise bestimmte Winkelstellungen blockiert sind und nur durch Betätigen eines Druckknopfs freigegeben werden.

In einer Ausgestaltung der Armatureneinheit umfasst das Regelmittel ein Absperrventil zur Regelung der Wassermenge und ein Thermostatventil, welches die Vorgabe einer einzustellenden Temperatur erlaubt. Über das Mengenbedienelement lässt sich das Absperrventil und über das Temperaturbedienelement lässt sich das Thermostatventil bedienen.

Ist der Wandabschnitt als Unterputzabschnitt ausgebildet und umfasst das Absperrventil und/oder das Thermostatventil, kann ein besonders kompakter Aufbau der montierten Armatureneinheit erreicht werden. Das Absperrventil und/oder das Thermostatventil sind entsprechend in einem Abschnitt des Grundkörpers angeordnet, welcher hinter der Wandebene und damit in der Wand verbaut wird. Somit kann die Länge reduziert werden, über welche die Armatureneinheit in den Raum hineinragt. Mengenbedienelement und/oder Temperaturbedienelement können mit den jeweiligen Ventilen über in Axialrichtung verlaufende Spindeln verbunden sein, um eine Einstellung der Ventile zu ermöglichen.

In einer bevorzugten Ausführungsform ist das Thermostatventil im als Unterputzabschnitt ausgebildeten Wandabschnitt angeordnet. Das Thermostatventil weist typischerweise im Vergleich zu sonstigen Elementen der Armatureneinheit größere Abmessungen auf, so dass diese Ausführungsform eine besonders kompakte Bauform ergibt. Das Absperrventil kann im Frontabschnitt insbesondere senkrecht zur Axialrichtung benachbart zum Ablauf angeordnet sein, womit die Länge der Armatureneinheit in Axialrichtung weiter reduziert werden kann.

In einer weiteren Ausgestaltung weist das Thermostatventil in Axialrichtung auf einer Seite Zuführungen für Warm- und Kaltwasser sowie mindestens eine Abführung auf.

Entsprechende Thermostatventile können für eine Abführung des Mischwassers in Richtung der Wasseranschlüsse ausgestaltet sein. Insbesondere wenn der Ablauf der Armatureneinheit im Frontbereich vorgesehen ist, kann der Grundkörper eine Wasserumkehrung umfassen, welche dafür eingerichtet ist, Wasser von der einen Seite des Thermostatventils auf eine zweite Seite des Thermostatventils herumzuführen. Beispielsweise werden die Zuführungen und Abführungen des Thermostatventils in Richtung der Wasseranschlüsse (d.h. insbesondere in Richtung der Wand) ausgerichtet. Die Wasserumkehrung führt das Mischwasser von der einen Seite des Thermostatventils in Richtung des Frontabschnitts. Die Wasserumkehrung erlaubt somit auch die Verwendung von Thermostatventilen mit Zuführungen und Abführung auf einer Seite in der erfindungsgemäßen Armatureneinheit.

Erfindungsgemäß sind der Wandabschnitt und der Frontabschnitt über mindestens ein Teleskoprohr in mindestens einer Bohrung verbunden, wobei das mindestens eine Teleskoprohr zumindest einen Teil der Wasserwege bildet. Das mindestens eine Teleskoprohr erlaubt eine mechanisch stabile und dichte Verbindung des Wandabschnitts und des Frontabschnitts, wobei die Verbindung zusätzlich in der Länge verstellbar ist. Beispielsweise kann über das mindestens eine Teleskoprohr der Abstand von Frontabschnitt und Wandanschlüssen verstellt werden und damit verschiedene Einbautiefen der Wandleitungen ausgeglichen werden.

Sind mehrere Bohrungen vorgesehen, in welche das Teleskoprohr jeweils unter einer Orientierung des Frontabschnitts relativ zum Wandabschnitt einführbar ist, kann der Frontabschnitt mit verschiedenen Orientierungen montiert werden. Beispielsweise kann der Frontabschnitt damit in zwei verschiedenen Winkelstellungen in den Wandabschnitt eingeführt werden (etwa 0° und 180°).

In einer weiteren Ausgestaltung sind zwei austauschbare Einsätze für die Wasserwege vorgesehen, welche dafür eingerichtet sind, dass mit einem Austauschen der Einsätze gegeneinander die Wasserwege für Kaltwasser und Warmwasser vertauscht werden.

Damit ist die Einbaurichtung der Armatureneinheit unabhängig von der Lage und Zuordnung der Wandleitungen.

In einer weiteren Ausgestaltung der Armatureneinheit weisen die Wasseranschlüsse Schalldämpfer und/oder Rückflussventile auf. Schalldämpfer können hierbei einer Geräuschreduzierung durch den vom Wasser übertragenen Schall und/oder den von den Rohren der Wasserleitungen übertragenen Schall dienen. Die Rückflussventile können einen Querfluss zwischen Kalt- und Warmwasserwegen verhindern.

Für weitere Ausgestaltungen und Vorteile der erfindungsgemäßen Armatureneinheit wird weiter auf die nachfolgende Beschreibung von beispielhaften Ausführungsformen sowie auf die Zeichnung verwiesen. In der Zeichnung zeigen
- Fig. 1: ein erstes Beispiel einer Armatureneinheit in einer perspektivischen Ansicht,
- Fig. 2: das erste Beispiel einer Armatureneinheit in einer perspektivischen Ansicht als Schnittdarstellung,
- Fig. 3: ein erstes Ausführungsbeispiel einer erfindungsgemäßen Armatureneinheit in einer perspektivischen Ansicht,
- Fig. 4: das erste Ausführungsbeispiel einer erfindungsgemäßen Armatureneinheit in einer perspektivischen Ansicht als Schnittdarstellung und
- Fig. 5: das erste Ausführungsbeispiel einer erfindungsgemäßen Armatureneinheit in einer weiteren Schnittdarstellung.

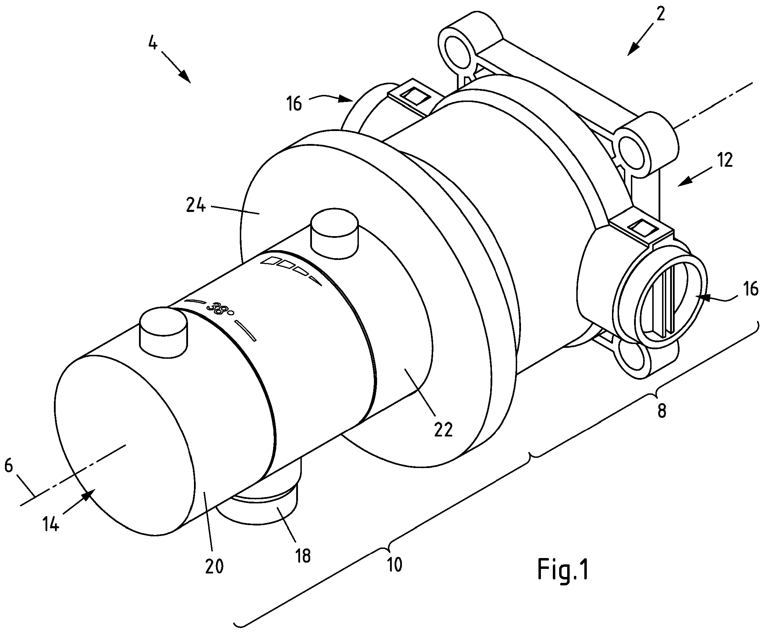

Fig. 1 zeigt ein erstes Beispiel einer Armatureneinheit 2 für den Sanitärbereich in einer perspektivischen Ansicht. Ein Grundkörper 4 aufweisend eine Axialrichtung 6, einen Wandabschnitt 8 zur Anbringung an einer Wand und einen Frontabschnitt 10 ist vorgesehen. Der Wandabschnitt 8 ist als Unterputzabschnitt ausgebildet.

Eine Wandseite 12 befindet sich am Wandabschnitt 8, wobei die Wandseite 12 an einem ersten Ende des Grundkörpers 4 in Axialrichtung 6 angeordnet ist. Eine Frontseite 14 befindet sich am Frontabschnitt 10, wobei die Frontseite 14 an einem zweiten Ende des Grundkörpers 4 angeordnet ist, welches dem ersten Ende in Axialrichtung 6 gegenüberliegt.

Wasseranschlüsse 16 sind am Wandabschnitt 8 vorgesehen, welche zur Verbindung mit einer Kaltwasserleitung und einer Warmwasserleitung (nicht dargestellt) dienen. Ein Ablauf 18 am Frontabschnitt 10 ist mit den Wasseranschlüssen 16 über Wasserwege im Inneren der Armatureneinheit 2 verbunden, wobei Regelmittel zum Einstellen der Wassertemperatur und Wassermenge vorgesehen sind.

Zum Bedienen der Regelmittel sind ein Temperaturbedienelement 20 zur Einstellung einer Wassertemperatur und ein Mengenbedienelement 22 zur Einstellung einer Wassermenge vorgesehen. Das Temperaturbedienelement 20 und das Mengenbedienelement 22 sind am Frontabschnitt 10 in Axialrichtung 6 nacheinander und zwischen Frontseite 14 und Wandseite 12 angeordnet, so dass eine besonders kompakte Bauform der Armatureneinheit 2 erreicht wird. Ebenso ist ein einhändiges Betätigen des Temperaturbedienelements 20 und des Mengenbedienelements 22 möglich, wobei gleichzeitig die Wassertemperatur und Wassermenge sehr genau eingestellt werden können.

Das Mengenbedienelement 22 ist in diesem Beispiel an einem dem Wandabschnitt 8 zugewandten Ende des Frontabschnitts an einer Abdeckung 24 angeordnet und ringförmig und drehbar ausgestaltet. Die Abdeckung 24 ist dafür vorgesehen, bei einer Montage der Armatureneinheit 2 mit einer Wand in Anlage zu kommen.

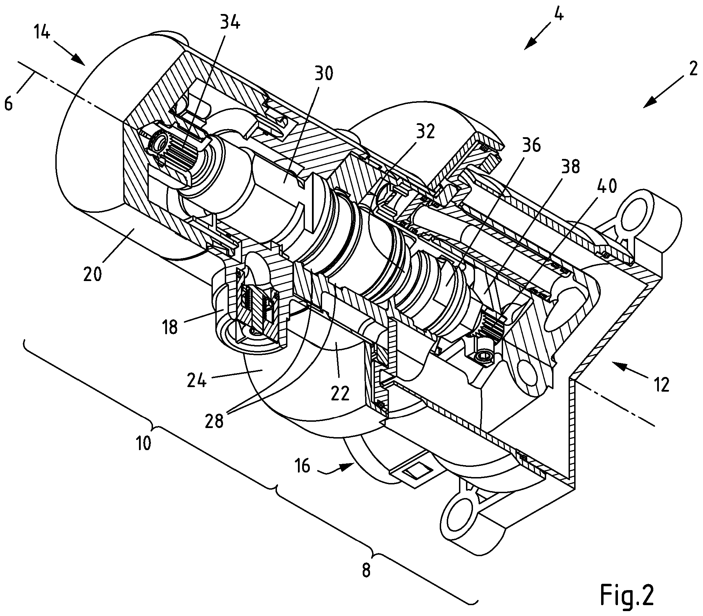

In Fig. 2 ist das erste Beispiel der Armatureneinheit 2 aus Fig. 1 in einer Schnittdarstellung in einer perspektivischen Ansicht gezeigt. Kalt- und Warmwasser kann von den Wandanschlüssen 16 über jeweilige Wasserwege zu Ringkanälen 28 gelangen, welche als Zuführungen von Warm- und Kaltwasser auf einer Seite eines Thermostatventils 30 dienen. Das Thermostatventil 30 weist auf der einen Seite eine Abführung 32 für Mischwasser auf.

Das Temperaturbedienelement 20 ist als Drehknopf ausgestaltet, wobei das Temperaturbedienelement 20 auf eine Spindel 34 des Thermostatventils 30 greift. Mit der Rotation der Spindel 34 kann die einzustellende Temperatur am Thermostatventil 30 vorgegeben werden.

Weiter ist ein Absperrventil 36 zur Regulierung der Wassermenge vorgesehen, welches an der Abführung 32 angeordnet ist. Das Mengenbedienelement 22 greift über eine Anlenkung 38 an eine Spindel 40 des Absperrventils 36. Über eine Drehung des ringförmigen Mengenbedienelements 22 kann somit die Spindel 40 rotiert und damit die Stellung des Absperrventils 36 beeinflusst werden. Bei geöffnetem Absperrventil 36 kann das vom Thermostatventil 30 kommende Mischwasser über eine Wasserumkehrung von der einen Seite des Thermostatventils 30, an dem sich die Abführung 32 befindet, auf die andere Seite in Richtung des Ablaufs 18 geleitet werden.

In dieser Ausgestaltung umfasst der als Unterputzabschnitt ausgebildete Wandabschnitt 8 das Absperrventil 36.

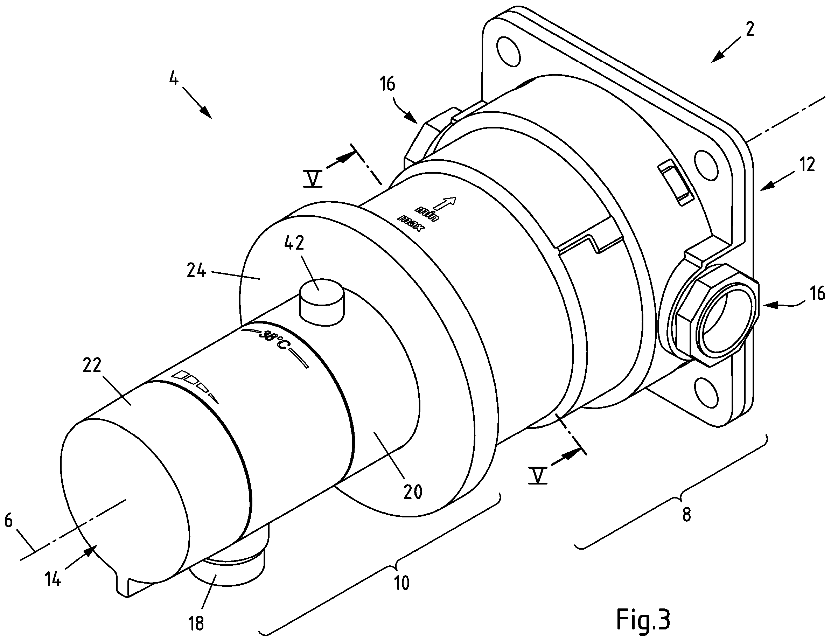

Fig. 3 zeigt ein erstes erfindungsgemäßes Ausführungsbeispiel einer Armatureneinheit 2 für den Sanitärbereich in einer perspektivischen Ansicht.

Einander entsprechende Elemente sind mit den gleichen Bezugszeichen wie in Fig. 1 und 2 gezeigt.

Bei dem ersten Ausführungsbeispiel ist das Temperaturbedienelement 20 zwischen Mengenbedienelement 22 und Wandseite 12 angeordnet. Das Temperaturbedienelement 20 ist zudem am dem Wandabschnitt 8 zugewandten Ende des Frontabschnitts 10 und an einer Abdeckung 24 angeordnet, so dass das Temperaturbedienelement 20 einfach zu betätigen ist. Über die Anordnung des Temperaturbedienelements 20 in einem mittleren Bereich des Grundkörpers 4 kann zudem ein unbeabsichtigtes Verstellen der Temperatur am Temperaturbedienelement 20 und ein Verbrühen vermieden werden.

Das Temperaturbedienelement 20 ist ringförmig um den Grundkörper 4 angeordnet und weist weiter einen Druckknopf 42 zum Verbrühungsschutz auf. Ein hohen Temperaturen zugeordneter Winkelbereich des Temperaturbedienelements 20 ist hierbei blockiert und lässt sich lediglich über eine Betätigung des Druckknopfs 42 erreichen.

Das Mengenbedienelement 22 ist als Drehknopf am zweiten Ende des Grundkörpers 4 angeordnet und bildet die Frontseite 14. Dadurch ist das Mengenbedienelement 22 einfach zu greifen und zu drehen.

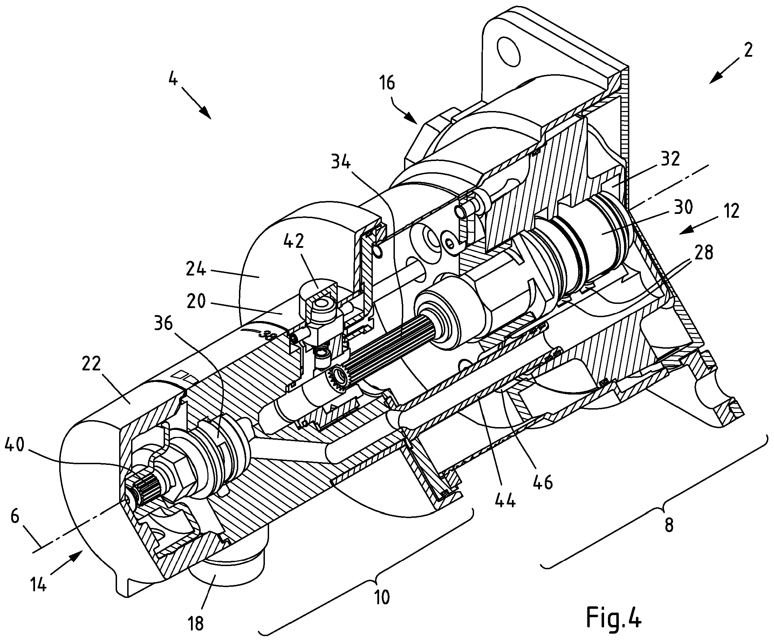

In Fig. 4 ist das erste Ausführungsbeispiel der Armatureneinheit 2 aus Fig. 3 in einer Schnittdarstellung in einer perspektivischen Ansicht gezeigt. Ein Thermostatventil 30 ist hierbei im Wandabschnitt 8 angeordnet, wobei der Wandabschnitt 8 als Unterputzabschnitt ausgebildet ist. Hierdurch kann die Armatureneinheit 2 sehr kompakt ausgebildet werden, da das typischerweise in Axialrichtung 6 längere Thermostatventil 30 in der Wand verbaut werden kann, so dass der in den Raum hineinragende Frontabschnitt 10 kürze taltet werden kann.

Kalt- und Warmwasser wird von den Wandanschlüssen 16 zu den Ringkanälen 28 geleitet, welche das Kalt- und Warmwasser auf einer Seite dem Thermostatventil 30 zuführen. Das Thermostatventil 30 weist auf der gleichen einen Seite eine Abführung 32 für das Mischwasser auf. Der Grundkörper 4 umfasst eine Abführung 32 für das Mischwasser auf. Der Grundkörper 4 umfasst eine Wasserumkehrung, welche dafür eingerichtet ist, das Mischwasser von der einen Seite des Thermostatventils 30 auf eine zweite Seite des Thermostatventils und damit in Richtung des Ablaufs 18 herumzuführen.

Das Mischwasser wird hierbei einem Teleskoprohr 44 zugeführt, wobei der Wandabschnitt 8 und der Frontabschnitt 10 über das in einer Bohrung 46 eingeführte Teleskoprohr 44 verbunden sind. Das Teleskoprohr 44 bildet hierbei einen Teil des Wasserwegs vom Thermostatventil 30 zum Absperrventil 36. Durch die Verbindung über das Teleskoprohr 44 in der Bohrung 46 lässt sich der Abstand von den Wandanschlüssen 16 zum Frontabschnitt 10 bzw. der Abdeckung 24, welche an der Wand anliegen soll, auf einfache Weise und dichtend verstellen. Folglich lassen sich verschiedene Einbautiefen von Wasserleitungen in der Wand über das Teleskoprohr 44 und die Bohrung 46 ausgleichen.

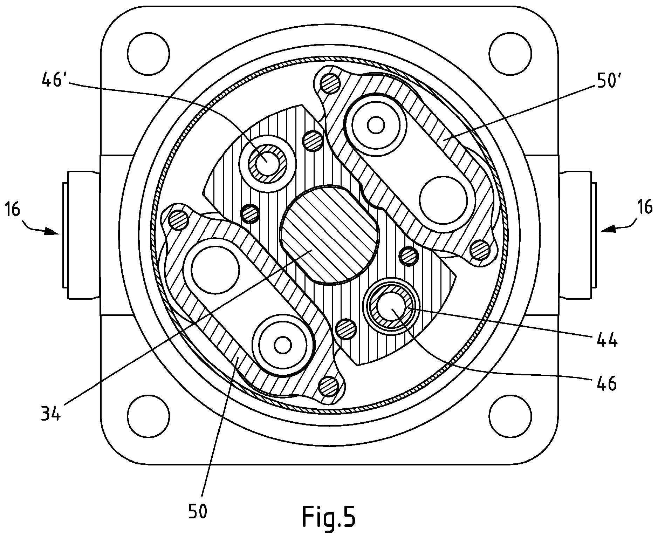

Zudem ist wie in Fig. 5 dargestellt eine zweite Bohrung 46' vorgesehen. Fig. 5 zeigt hierbei einen Schnitt durch die Armatureneinheit 2 senkrecht zur Axialrichtung 6 in der Höhe des Teleskoprohrs 44. Das Teleskoprohr 44 lässt sich mit einer Drehung des Frontabschnitts 10 von 180° um die Axialrichtung 6 mit zwei verschiedenen Orientierungen einführen.

Weiter wird ein Teil der Wasserwege durch zwei austauschbare Einsätze 50, 50' gebildet. Die Einsätze 50, 50' sind gegeneinander austauschbar, wobei einer der Einsätze 50, 50' einen Wasserweg zum Ringkanal 28 für Kaltwasser und der andere Einsatz 50, 50' einen Wasserweg zum Ringkanal 28 für Warmwasser bereitstellt. Mit einem Austauschen der Einsätze 50, 50' gegeneinander werden somit die Wasserwege für Kaltwasser und Warmwasser vertauscht. Somit kann die Orientierung der Armatureneinheit 2 unabhängig von der Zuordnung der Wasserleitungen in der Wand zu Warm- und Kaltwasser gewählt werden.

Wie in Fig. 4 weiter gezeigt, greift das Temperaturbedienelement 20 auf eine Spindel 34 des Thermostatventils 30, wobei mit der Drehung des ringförmigen Temperaturbedienelements 20 auch die Spindel 34 rotiert wird, um eine einzustellende Wassertemperatur vorzugeben.

In Richtung des Wasserlaufs ist vor dem Ablauf 18 das Absperrventil 36 vorgesehen. Das Absperrventil 36 ist in der gleichen Ebene senkrecht zur Axialrichtung 6 wie der Ablauf 18 angeordnet, womit die Armatureneinheit 2 und insbesondere der Frontabschnitt 10 weiter in Axialrichtung 6 verkürzt werden können.

Das Mengenbedienelement 22 ist als Drehknopf ausgebildet und greift auf eine Spindel 40, womit das Absperrventil 36 betätigt werden kann.

Die Wasseranschlüsse 16 weisen zudem jeweils einen Schalldämpfer und ein Rückflussventil auf. Die Schalldämpfer können den vom Wasser übertragenen Schall reduzieren. Die Rückflussventile dienen einer Unterbindung eines Querflusses zwischen den Wasseranschlüssen 16 bzw. den Kalt- und Warmwasserwegen.

## Patentansprüche

1. Armatureneinheit für den Sanitärbereich,
- mit einem Grundkörper (4) aufweisend eine Axialrichtung (6), einen Wandabschnitt (8) zur Anbringung an einer Wand und einen Frontabschnitt (10),
- mit einer Wandseite (12) am Wandabschnitt (8), wobei die Wandseite (12) an einem ersten Ende des Grundkörpers (4) in Axialrichtung (6) angeordnet ist,
- mit einer Frontseite (14) am Frontabschnitt (10), wobei die Frontseite (14) an einem zweiten Ende des Grundkörpers (4) angeordnet ist, welches dem ersten Ende in Axialrichtung (6) gegenüberliegt,
- mit Wasseranschlüssen (16) am Wandabschnitt (8),
- mit mindestens einem Ablauf (18), welcher mit den Wasseranschlüssen (16) über Wasserwege verbunden ist, wobei Volumenströme durch die Wasserwege über Regelmittel regelbar sind,
- mit einem Temperaturbedienelement (20) zur Einstellung einer Wassertemperatur anhand der Regelmittel und
- mit einem Mengenbedienelement (22) zur Einstellung einer Wassermenge anhand der Regelmittel,
- wobei das Temperaturbedienelement (20) und das Mengenbedienelement (22) am Frontabschnitt (10) in Axialrichtung (6) nacheinander und zwischen Frontseite (14) und Wandseite (12) angeordnet sind.
**dadurch gekennzeichnet,**
- **dass** Wandabschnitt (8) und Frontabschnitt (10) über mindestens ein Teleskoprohr (44) in mindestens einer Bohrung (46, 46') verbunden sind, wobei das mindestens eine Teleskoprohr (44) zumindest einen Teil der Wasserwege bildet.

2. Armatureneinheit nach Anspruch 1,
**dadurch gekennzeichnet,**
**dass** das Temperaturbedienelement (20) zwischen Mengenbedienelement (22) und Wandseite (12) angeordnet ist.

3. Armatureneinheit nach Anspruch 2,
**dadurch gekennzeichnet,**
**dass** das Mengenbedienelement (22) am zweiten Ende des Grundkörpers (4) angeordnet ist.

4. Armatureneinheit nach Anspruch 2 oder 3,
**dadurch gekennzeichnet,**
**dass** das Temperaturbedienelement (22) ringförmig um den Grundkörper (4) angeordnet ist und optional einen Druckknopf (42) zum Verbrühungsschutz aufweist.

5. Armatureneinheit nach einem der Ansprüche 1 bis 4,
**dadurch gekennzeichnet,**
**dass** das Regelmittel ein Absperrventil (34) und ein Thermostatventil (30) umfasst.

6. Armatureneinheit nach Anspruch 5,
**dadurch gekennzeichnet,**
**dass** der Wandabschnitt (8) als Unterputzabschnitt ausgebildet ist und das Absperrventil (34) und/oder das Thermostatventil (30) umfasst.

7. Armatureneinheit nach Anspruch 5 oder 6,
**dadurch gekennzeichnet,**
- **dass** das Thermostatventil (30) in Axialrichtung auf einer Seite Zuführungen für Warm- und Kaltwasser sowie mindestens eine Abführung (32) aufweist und
- **dass** der Grundkörper (4) eine Wasserumkehrung umfasst, welche dafür eingerichtet ist, Wasser von der einen Seite des Thermostatventils (30) auf eine zweite Seite des Thermostatventils (30) herumzuführen.

8. Armatureneinheit nach einem der Ansprüche 1 bis 7,
**dadurch gekennzeichnet,**
**dass** zwei austauschbare Einsätze (50, 50') für die Wasserwege vorgesehen sind, welche dafür eingerichtet sind, dass mit einem Austauschen der Einsätze (50, 50') gegeneinander die Wasserwege für Kaltwasser und Warmwasser vertauscht werden.

9. Armatureneinheit nach einem der Ansprüche 1 bis 8,
**dadurch gekennzeichnet,**
**dass** die Wasseranschlüsse (16) Schalldämpfer und/oder Rückflussventile aufweisen.

## Claims

1. Fitting unit for the sanitary sector,
- with a base body (4) having an axial direction (6), a wall section (8) for mounting on a wall and a front section (10),
- with a wall side (12) on the wall section (8), the wall side (12) being arranged at a first end of the base body (4) in the axial direction (6),
- with a front side (14) at the front portion (10), the front side (14) being arranged at a second end of the basic body (4) which is opposite the first end in the axial direction (6),
- with water connections (16) at the wall section (8),
- with at least one outlet (18) which is connected to the water connections (16) via water paths, wherein volumetric flows through the water paths can be regulated via regulating means,
- with a temperature control element (20) for setting a water temperature by means of the control means, and
- with a volume control element (22) for setting a volume of water by means of the control means,
- wherein the temperature control element (20) and the flow control element (22) being arranged on the front section (10) one after the other in the axial direction (6) and between the front side (14) and the wall side (12).
**characterised in**
- **that** wall section (8) and front section (10) are connected via at least one telescopic pipe (44) in at least one bore (46, 46'), wherein the at least one telescopic pipe (44) forms at least part of the waterways.

2. A valve unit according to claim 1,
**characterized in**
**that** the temperature control element (20) is arranged between the flow control element (22) and the wall side (12).

3. Fitting unit according to claim 2,
**characterised in**
**that** the volume control element (22) is arranged at the second end of the basic body (4).

4. Fitting unit according to claim 2 or 3,
**characterized in**
**that** the temperature control element (22) is arranged in an annular shape around the base body (4) and optionally has a push button (42) for scald protection.

5. Fitting unit according to one of the claims 1 to 4,
**characterised in**
**that** the control means comprises a shut-off valve (34) and a thermostatic valve (30).

6. Fitting unit according to claim 5,
**characterized in**
**that** the wall section (8) is designed as a flush-mounted section and comprises the shut-off valve (34) and/or the thermostatic valve (30).

7. Fitting unit according to claim 5 or 6,
**characterised in**
- **that** the thermostatic valve (30) has inlets for hot and cold water and at least one outlet (32) in the axial direction on one side, and
- in that the base body (4) comprises a water reversal which is set up to guide water around from one side of the thermostatic valve (30) to a second side of the thermostatic valve (30).

8. Valve unit according to any one of claims 1 to 7,
**characterized in**
**that** two interchangeable inserts (50,50') are provided for the water paths, which inserts are arranged so that the water paths for cold water and hot water are interchanged when the inserts (50, 50') are interchanged with one another.

9. Fitting unit according to one of the claims 1 to 8,
**characterized in**
**that** the water connections (16) have silencers and/or non-return valves.

## Revendications

1. Unité de robinetterie pour le domaine sanitaire,
- comportant un corps de base (4) ayant une direction axiale (6), une section de paroi (8) pour la fixation sur une paroi et une section avant (10),
- comportant un côté paroi (12) sur la section de paroi (8), le côté paroi (12) étant disposé à une première extrémité du corps de base (4) dans la direction axiale (6),
- comportant un côté avant (14) sur la section avant (10), le côté avant (14) étant disposé à une seconde extrémité du corps de base (4) qui est opposée à la première extrémité dans la direction axiale (6),
- comportant des raccords d'eau (16) sur la section de paroi (8),
- comportant au moins une sortie (18) qui est reliée aux raccords d'eau (16) par des conduites d'eau, les débits volumiques dans les conduites d'eau pouvant être régulés par des moyens de régulation,
- comportant un élément de commande de température (20) pour régler une température de l'eau à l'aide des moyens de régulation et
- comportant un élément de commande de quantité (22) pour régler une quantité d'eau à l'aide des moyens de régulation,
- l'élément de commande de température (20) et l'élément de commande de quantité (22) étant disposés l'un après l'autre dans la direction axiale (6) sur la section avant (10) et entre le côté avant (14) et le côté paroi (12),
**caractérisée en ce que**
- la section de paroi (8) et la section avant (10) sont reliées par au moins un tuyau télescopique (44) dans au moins un alésage (46, 46'), l'au moins un tuyau télescopique (44) formant au moins une partie des conduites d'eau.

2. Unité de robinetterie selon la revendication 1,
**caractérisée en ce que**
l'élément de commande de température (20) est disposé entre l'élément de commande de quantité (22) et le côté paroi (12).

3. Unité de robinetterie selon la revendication 2,
**caractérisée en ce que**
l'élément de commande de quantité (22) est disposé à la seconde extrémité du corps de base (4).

4. Unité de robinetterie selon la revendication 2 ou 3,
**caractérisée en ce que**
l'élément de commande de température (22) est disposé en anneau autour du corps de base (4) et comporte éventuellement un bouton poussoir (42) pour la protection contre les brûlures.

5. Unité de robinetterie selon l'une des revendications 1 à 4,
**caractérisée en ce que**
le moyen de régulation comprend une vanne d'arrêt (34) et une vanne thermostatique (30).

6. Unité de robinetterie selon la revendication 5,
**caractérisée en ce que**
la section de paroi (8) est conçue comme une section à encastrer et comprend la vanne d'arrêt (34) et/ou la vanne thermostatique (30).

7. Unité de robinetterie selon la revendication 5 ou 6,
**caractérisée en ce que**
- la vanne thermostatique (30) a, dans la direction axiale, des entrées pour l'eau chaude et l'eau froide d'un côté et au moins une sortie (32) et
- **en ce que** le corps de base (4) comprend un inverseur d'eau qui est conçu pour amener l'eau d'un côté de la vanne thermostatique (30) à un second côté de la vanne thermostatique (30).

8. Unité de robinetterie selon l'une des revendications 1 à 7,
**caractérisée en ce que**
deux inserts interchangeables (50, 50') sont prévus pour les conduites d'eau, lesquels inserts sont conçus de telle sorte que lorsque les inserts (50, 50') sont échangés, les conduites d'eau pour l'eau froide et l'eau chaude sont interchangées.

9. Unité de robinetterie selon l'une des revendications 1 à 8,
**caractérisée en ce que**
les raccords d'eau (16) comportent des silencieux et/ou des clapets anti-retour.
